# FASCICULE DE BREVET EUROPEEN

(11) **EP 3 847 344 B1**
(45) Date de publication et mention de la délivrance du brevet: **13.07.2022**
(21) Numéro de dépôt: 19786369.9
(22) Date de dépôt: 03.09.2019
(51) Int. Cl.: F01D 17/16, F02C 6/12

(54) **DISTRIBUTEUR D'UNE TURBINE RADIALE DE TURBOMACHINE, TURBOMACHINE COMPRENANT UN TEL DISTRIBUTEUR ET SYSTÈME DE CONDITIONNEMENT D'AIR COMPRENANT UNE TELLE TURBOMACHINE**
VERTEILER FÜR EINE RADIALTURBINE EINER TURBOMASCHINE, TURBOMASCHINE MIT EINEM SOLCHEN VERTEILER UND KLIMAANLAGE MIT EINER SOLCHEN TURBOMASCHINE
DISTRIBUTOR FOR A TURBOMACHINE RADIAL TURBINE, TURBOMACHINE COMPRISING SUCH A DISTRIBUTOR AND AIR CONDITIONING SYSTEM COMPRISING SUCH A TURBOMACHINE

(30) Priorité: 06.09.2018 FR 1857998
(43) Date de publication de la demande: 14.07.2021
(73) Titulaire: Liebherr-Aerospace Toulouse SAS, 31200 Toulouse (FR); Institut Supérieur de l'Aéronautique et de l'Espace, 31055 Toulouse Cedex 4 (FR)
(72) Inventeur: CROS, Sandrine, 31016 TOULOUSE Cedex 2 (FR); ROUMEAS, Mathieu, 31016 TOULOUSE Cedex 2 (FR); FOURAGNAN, James, 31016 TOULOUSE Cedex 2 (FR); LAURIAU, Pierre-Thomas, 31016 TOULOUSE Cedex 2 (FR); BINDER, Nicolas, 31016 TOULOUSE Cedex 2 (FR)
(74) Mandataire: Bringer IP
(86) Numéro de dépôt international: PCT/FR2019/052032
(87) Numéro de publication internationale: WO 2020/049255

(56) Documents cités:
- EP-A2- 0 248 624
- EP-A2- 1 998 026
- WO-A1-2008/095568
- WO-A1-2012/164227
- FR-A1- 3 009 347

## Description

### 1. Domaine technique de l'invention

L'invention concerne un distributeur d'une turbine radiale d'une turbomachine, en particulier destinée à équiper un système de conditionnement d'air d'un aéronef.

### 2. Arrière-plan technologique

Un système de conditionnement d'air d'un aéronef comprend de manière classique un dispositif de prélèvement d'air et une turbomachine à cycle à air comprenant au moins un compresseur et une turbine radiale, le compresseur étant alimenté en air par le dispositif de prélèvement d'air, et la turbine comprenant une sortie d'air alimentant la cabine en un air à température et débit contrôlés. Le système comprend en outre différents échangeurs de chaleur, vannes de régulation et boucles d'extraction d'eau.

Différentes solutions sont aujourd'hui proposées pour limiter le prélèvement d'air sur les moteurs propulsifs de l'aéronef et qui consistent notamment à prévoir des systèmes de conditionnement d'air plus électriques.

Cette transition vers une électrification du système de conditionnement d'air impose d'optimiser les différents éléments constitutifs du système et notamment de la turbine de la turbomachine à cycle à air.

Cette turbine doit permettre d'assurer une large plage de débit d'air tout en fournissant le maximum de puissance possible sur l'ensemble de la plage de fonctionnement.

En particulier, la turbine doit pouvoir fonctionner depuis une phase de maintenance de l'aéronef au sol (ce qui correspond à un faible débit et à un fort taux de détente) jusqu'à une phase de vol de croisière de l'aéronef (ce qui correspond à un fort débit et à un faible taux de détente).

Il a déjà été proposé de prévoir une turbine à section d'injection variable. Une telle turbine comprend de manière connue un carter, une roue mobile en rotation autour d'un axe central équipée d'ailettes (aussi désignée par le terme de rotor), et un distributeur agencé en périphérie de la roue mobile et comprenant une pluralité de pales de guidage du flux d'air vers le rotor.

Il existe aujourd'hui deux solutions principales permettant de faire varier la section d'injection d'une telle turbine radiale.

La première solution consiste à modifier la section de passage d'air par le déplacement en translation axiale du carter, ce qui permet d'augmenter la hauteur de la veine d'air pour un profil et un calage de pales donnés. Cette solution présente l'inconvénient de risquer de provoquer une admission partielle d'air en entrée de roue, ce qui génère alors des écoulements secondaires au bord d'attaque de la roue et dégrade donc la performance de l'étage. Le document US2739782 décrit par exemple une turbine à section d'injection variable selon cette première solution.

La seconde solution consiste à modifier la section de passage d'air par le pivotement des pales du distributeur de la turbine de telle sorte que pour un profil et une hauteur de veine d'air donnés, l'angle des pales du distributeur puisse être modifié. Cette solution impose la présence d'un jeu mécanique au niveau du distributeur pour permettre la rotation des pales, ce qui diminue le rendement de l'étage. En outre, la plage de variation de la section d'injection souhaitée étant en général importante (par exemple de l'ordre de 1:4), il existe un risque de désadaptation de l'entrée de la roue pour les ouvertures ou fermetures extrêmes. Il existe également un risque de blocage au niveau de l'entrée de la roue. Le document EP0332354 décrit par exemple une turbine à section d'injection variable selon cette deuxième solution. WO2012/164227 divulgue un distributeur de turbine radiale à calage variable selon le préambule de la revendication 1.

Aucune des solutions actuellement connues ne permet donc de modifier la section d'injection sur une large plage de débit tout en maintenant un niveau de performance et de fiabilité compatible avec les besoins des systèmes de conditionnement d'air.

Il existe donc un besoin de disposer d'une solution alternative permettant de pallier les inconvénients des solutions connues.

### 3. Objectifs de l'invention

L'invention vise à fournir un distributeur d'une turbine radiale qui pallie au moins certains des inconvénients des solutions connues.

L'invention vise en particulier à fournir, dans au moins un mode de réalisation, un distributeur d'une turbine radiale qui permet de modifier la section d'injection de la turbine sur une large plage de débit tout en conservant un niveau de performance et de fiabilité compatible avec les applications aéronautiques.

L'invention vise en particulier à fournir un distributeur d'une turbine radiale d'un système de conditionnement d'air d'un aéronef.

L'invention vise aussi à fournir une turbine radiale équipée d'un distributeur selon l'invention et un système de conditionnement d'air comprenant une turbine selon l'invention.

### 4. Exposé de l'invention

Pour ce faire, l'invention concerne un distributeur d'une turbine radiale de turbomachine comprenant un rotor équipé d'ailettes adapté pour être mis en rotation autour d'un axe central, ledit distributeur comprenant une grille annulaire s'étendant autour dudit axe central, destinée à être agencée en périphérie dudit rotor et comprenant une pluralité de pales à calage variable agencées autour dudit axe central délimitant entre elles une section de passage d'une veine d'air dudit distributeur vers ledit rotor, chaque pale à calage variable s'étendant en outre selon une direction principale et présentant un bord d'attaque et un bord de fuite destiné à être agencé en regard du bord d'attaque des ailettes du rotor.

Un distributeur selon l'invention est caractérisé en ce que chaque pale à calage variable est montée mobile en rotation autour d'un arbre de pivotement s'étendant parallèlement à l'axe central, cet arbre de pivotement étant lui-même mobile par rapport à l'axe central selon une direction, dite direction de translation, comprenant au moins une composante radiale, de sorte que cette pale puisse, sur actionnement de moyens de commande, être pivotée autour de l'arbre de pivotement et/ou déplacée par rapport à l'axe central suivant ladite direction de translation de manière à pouvoir modifier ladite section de passage de la veine d'air d'amont en aval du distributeur, en contrôlant respectivement l'angle, dit angle métal, formé entre la direction principale de la pale et la direction radiale, et l'écart radial qui sépare le bord de fuite de la pale et le bord d'attaque des ailettes du rotor.

L'invention permet donc de modifier la section de passage de la veine d'air d'amont en aval du distributeur en contrôlant à la fois l'ouverture de la pale (c'est-à-dire le pivotement de la pale) et sa position dans la veine d'air. Cela est rendu possible par le montage de chaque pale sur un arbre de pivotement qui est lui-même mobile par rapport à l'axe central selon une direction de translation qui comprend au moins une composante radiale, c'est-à-dire selon une direction non azimutale ou non orthoradiale (c'est-à-dire non perpendiculaire à la direction radiale).

Un distributeur selon l'invention permet donc de modifier à la fois l'angle formé entre la direction principale de la pale et la direction radiale qui définit l'ouverture/fermeture de la pale et l'écart radial qui sépare le bord de fuite de la pale et le bord d'attaque du rotor.

Ainsi, le déplacement de la pale dans la veine d'air, à la fois selon la direction de translation et/ou en pivotement, permet d'améliorer les performances de l'étage de détente. Cette amélioration de l'étage de détente permet d'obtenir une turbine dont la géométrie peut varier en fonctionnement et qui présente des rendements optimisés sur une large plage de débit d'air.

Avantageusement et selon l'invention, ledit arbre de pivotement de chaque pale est monté mobile en translation radiale par rapport à l'axe central de sorte que ladite direction de translation coïncide avec la direction radiale.

Cette direction de translation peut par exemple être la direction radiale selon une variante avantageuse de l'invention, mais peut également, selon d'autres variantes être toute direction non azimutale de sorte que le déplacement de l'arbre de pivotement selon cette direction permette de modifier la position de l'arbre de pivotement par rapport à l'axe central, et donc de modifier l'écart radial qui sépare le bord de fuite de la pale et le bord d'attaque des ailettes du rotor.

Avantageusement et selon l'invention, lesdits moyens de commande desdites pales à calage variable sont configurés pour pouvoir contrôler, pour chaque pale, le pivotement de la pale autour de son arbre de pivotement concomitamment au déplacement de la pale selon ladite direction de translation (par exemple la direction radiale).

Cette variante avantageuse permet de commander, pour chaque pale, la position angulaire de la pale concomitamment à l'écart radial qui sépare le bord de fuite de la pale et le bord d'attaque des ailettes du rotor agencées en regard de la pale. En d'autres termes, selon ce mode de réalisation avantageux, le pivotement de la pale autour de l'arbre de pivotement et le déplacement de la pale selon ladite direction de translation de la pale sont liés l'un à l'autre et coordonnés pour être réalisés simultanément.

Un distributeur selon cette variante permet la variation simultanée du calage de la pale (c'est-à-dire sa rotation autour de l'arbre de pivotement) et de la position radiale du point de pivot de cette pale dans la méridienne d'air (c'est-à-dire le déplacement radial - ou selon la direction de translation dans le cas d'un déplacement non exclusivement radial - de la pale par rapport à l'axe central). Cette simultanéité de la rotation et du déplacement radial permet la modification de la section d'injection tout en améliorant les performances de l'étage de détente.

Avantageusement et selon l'invention, lesdits moyens de commande de chaque pale comprennent des moyens mécaniques de renvoi d'axe permettant de déplacer ladite pale selon une translation radiale de ladite pale.

Avantageusement et selon l'invention, lesdits moyens de commande desdites pales à calage variable sont configurés pour pouvoir maintenir constant, pour chaque pale, et pour toute position de l'arbre de pivotement de cette pale, le coefficient El=ΔR/H.cos(*α*3f), où ΔR définit l'écart radial qui sépare le bord de fuite de la pale et le bord d'attaque des ailettes du rotor, *α3ƒ* définit l'angle formé entre la direction d'écoulement de l'air au niveau du bord de fuite de la pale et la direction radiale et H définit la hauteur, selon la direction de l'axe central, de la veine d'air.

Cette variante avantageuse permet de conserver le coefficient El optimal pour toutes les configurations de réglage des pales. En particulier, ce coefficiant El est avantageusement déterminé pour être proche d'une valeur spécifique prédéterminée qui assure un bon compromis entre les pertes par frottements et les pertes dues aux interactions entre le bord de fuite des pales et le bord d'attaque des ailettes.

Avantageusement et selon l'invention, le distributeur comprend au moins treize pales à calage variable régulièrement réparties autour de l'axe central

Il est néanmoins possible de concevoir des variantes de réalisation comprenant moins de treize pales à calage variable et/ou des pales à calage variable réparties de manière non régulière autour de l'axe central.

L'invention concerne également une turbine radiale de turbomachine s'étendant le long d'un axe central et comprenant un rotor équipé d'ailettes monté mobile en rotation autour dudit axe central, un distributeur agencé en périphérie dudit rotor comprenant une pluralité de pales à calage variable, et une volute comprenant une entrée d'air et une sortie d'air débouchant sur ladite pluralité de pales à calage variable, caractérisée en ce que ledit distributeur est un distributeur selon l'invention.

Les avantages d'un distributeur selon l'invention s'appliquent *mutatis mutandis* à une turbomachine selon l'invention.

L'invention concerne également un système de conditionnement d'air d'un aéronef comprenant une turbomachine comprenant au moins une turbine et un compresseur, caractérisé en ce que ladite turbine est une turbine radiale selon l'invention.

Les avantages d'une turbomachine selon l'invention s'appliquent *mutatis mutandis* à un système de conditionnement d'air selon l'invention.

L'invention concerne également un aéronef comprenant une cabine à alimenter en air à pression et température contrôlées par un système de conditionnement d'air selon l'invention.

L'invention concerne également un distributeur d'une turbine radiale, une turbine radiale et un système de conditionnement d'air caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'une turbine selon un mode de réalisation de l'invention équipée d'un distributeur selon un mode de réalisation de l'invention,
- les figures 2a et 2b sont des vues schématiques partielles d'un distributeur illustrant le déplacement d'une pale à la fois en pivotement et en translation radiale, permettant de modifier de manière indépendante l'angle fluide *α*3*ƒ* et d'écart radial ΔR,
- la figure 3 est une vue schématique en perspective d'une pale d'un distributeur selon un mode de réalisation de l'invention,
- la figure 4 est une vue schématique en coupe partielle du distributeur selon un mode de réalisation de l'invention dans un plan longitudinal de la turbine le long de son axe de rotation,
- la figure 5 est une vue schématique en perspective d'une roue de turbine et d'un distributeur de turbine selon un mode de réalisation de l'invention.

### 6. Description détaillée d'un mode de réalisation de l'invention

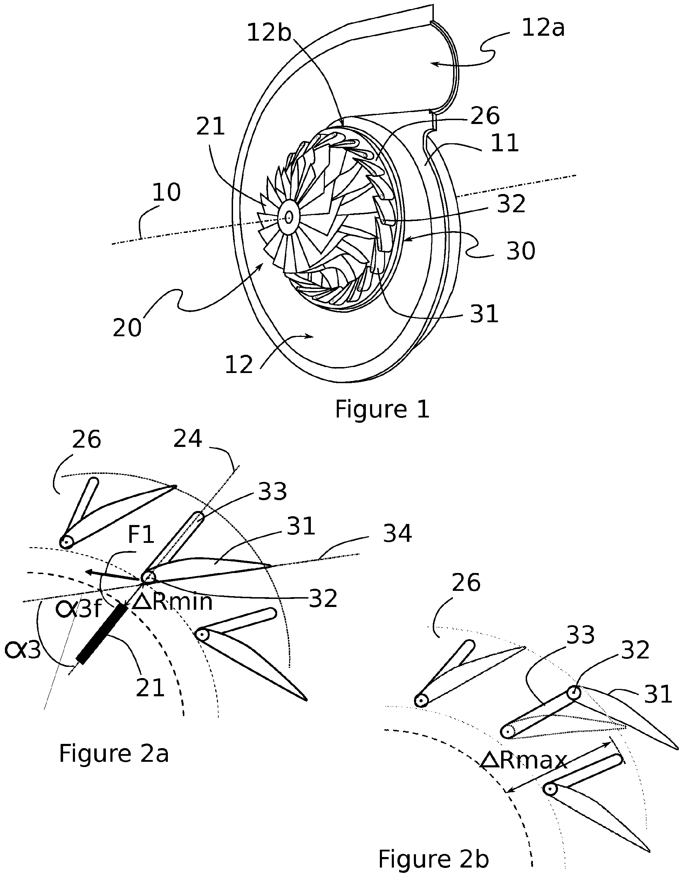

Sur les figures, les échelles et les proportions ne sont pas strictement respectées et ce, à des fins d'illustration et de clarté. Dans toute la description détaillée qui suit en référence aux figures, sauf indication contraire, chaque élément du distributeur est décrit tel qu'il est agencé lorsque le distributeur est monté sur une turbine. Cet agencement est représenté notamment sur la figure 1.

En outre, les éléments identiques, similaires ou analogues sont désignés par les mêmes références dans toutes les figures.

La figure 1 illustre schématiquement une turbine radiale selon un mode de réalisation de l'invention qui s'étend le long d'un axe central 10 et comprend une roue 20 mobile en rotation autour de l'axe central 10 et un distributeur 30 agencé en périphérie de la roue 20 sur un carter 11 (dont seul un demi-carter est représenté sur la figure 1). La roue 20 est équipée d'une pluralité d'ailettes 21.

La turbine comprend également une volute 12 (dont une demi-volute est représentée sur la figure 1) dont le diamètre diminue entre une entrée 12a et une sortie 12b qui débouche sur le distributeur 30.

Le distributeur 30 comprend également une grille annulaire 26 qui s'étend autour de l'axe centrale 10 et une pluralité de pales 31 à calage variable, chaque pale 31 à calage variable étant solidaire d'un arbre 32 de pivotement qui s'étend parallèlement à l'axe central 10.

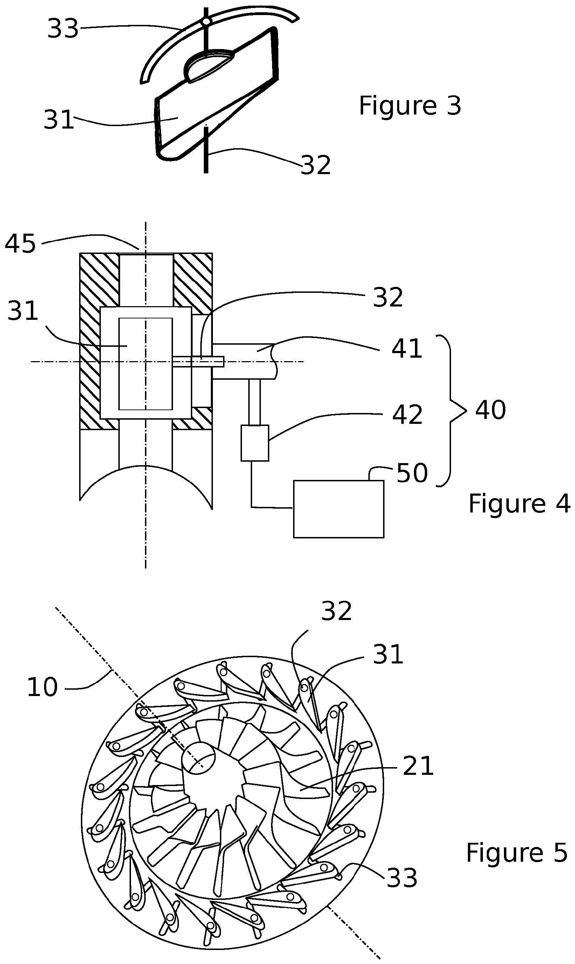

La figure 5 illustre schématiquement en perspective la roue 20 et le distributeur 30 de la turbine selon un mode de réalisation.

Chaque arbre 32 de pivotement est logé dans une lumière de guidage 33 de l'arbre de la pale. Cette lumière de guidage 33 s'étend selon la direction radiale, qui forme la direction de translation de la pale 31, dans le mode de réalisation de la figure 5. Ainsi, la pale 31 peut être pivotée autour de l'axe de pivotement formé par l'arbre 32 de pivotement et/ou déplacé dans la veine d'air par le coulissement de l'arbre 32 de pivotement dans la lumière de guidage 33.

Bien entendu, d'autres moyens peuvent être mis en œuvre pour assurer le déplacement radial de l'arbre de pivotement. Ces moyens peuvent ainsi, par exemple, comprendre un mécanisme de renvoi d'axe permettant d'assurer une translation radiale de la pale 31.

Sur les figures 1 et 5, et pour chaque pale 31, l'arbre de pivotement 32 de la pale est représenté au voisinage du bord d'attaque de la pale. Bien entendu, selon d'autres modes de réalisation, cet arbre de pivotement 32 peut être agencé ailleurs sur la pale 31, notamment au voisinage du bord de fuite de la pale, au centre de la pale, et d'une manière générale en tout point de la pale. La position de l'arbre de pivotement 32 dépend des spécifications visées par le distributeur selon l'invention.

La figure 3 illustre schématiquement, et de manière plus détaillée, une pale 31 solidaire de son arbre de pivotement 32, lui-même mobile en translation radiale dans une lumière de guidage 33.

Le principe de déplacement des pales 31 du distributeur selon l'invention ressort également des figures 2a et 2b qui illustrent, de manière schématique, une pale 31 d'un distributeur selon un autre mode de réalisation de l'invention et une ailette 21 d'un rotor d'une turbomachine agencée en regard de cette pale 31. L'angle métal *α*3 définit l'angle formé entre la direction principale 34 de la pale 31 et la direction radiale 24 le long de laquelle s'étend une ailette 21 du rotor.

L'angle fluide *α*3*f* définit l'angle formé entre la direction d'écoulement du fluide au niveau du bord de fuite de la pale 31, représentée par une flèche référencée F1 sur la figure 2a, et la direction radiale 24 le long de laquelle s'étend l'ailette 21 du rotor. Enfin, l'écart radial ΔR définit la distance qui sépare le bord de fuite de la pale 31 et le bord d'attaque de l'ailette 21 du rotor.

Chaque pale 31 est en outre montée mobile en translation radiale dans une lumière de guidage 33 radiale par le coulissement de l'arbre de pivotement 32 de la pale 31 dans cette lumière de guidage.

La figure 2a représente la pale 31 dans une première position caractérisée par un angle fluide *α*3*f* et un écart ΔR donnés. Cette configuration correspond au positionnement de l'arbre 32 de pivotement de la pale 31 au niveau d'une première extrémité radiale de la lumière de guidage. Cet agencement minimise l'écart radial ΔR, d'où la mention ΔRmin sur la figure 2a. Sur la figure 2b, l'arbre de pivotement de la pale 31 est agencé au niveau de l'extrémité radiale opposée de la lumière de guidage 33. Cet agencement maximise l'écart radial ΔR, d'où la mention ΔRmax sur la figure 2b. Dans le cas où la lumière de guidage s'étend selon la direction radiale, la longueur de la lumière définit la différence entre ΔRmax et ΔRmin.

En outre, dans la configuration de la figure 2b, la pale 31 est pivotée par rapport à la configuration de la figure 2a. La pale en pointillé de la figure 2b représente la pale 31 dans la configuration de la figure 2a pour appréhender le changement d'angle et de position radiale de la pale dans la configuration de la figure 2b.

L'invention permet donc d'imposer à chaque pale 31 du distributeur un angle d'ouverture/fermeture et une position radiale de l'arbre de pivotement 32 de la pale 31. En particulier, toute configuration intermédiaire entre les deux configurations extrêmes (en ce qui concerne la position radiale du point de pivot) représentées sur les figures 2a et 2b est permise par un distributeur selon l'invention.

Sur les figures 2a et 2b, seules quelques pales sont représentées, étant entendu qu'en pratique, chaque pale peut être déplacée à la fois en pivotement autour de son arbre de pivotement et en translation radiale.

L'invention permet notamment de maintenir le coefficient El=ΔR/H.cos(*α*3f) constant par un contrôle dépendant de l'angle fluide *α*3*f* et l'écart ΔR des différentes pales 31 du distributeur.

La figure 4 illustre schématiquement la pale 31 et les moyens de commande 40 de calage de la pale. Ces moyens de commande 40 comprennent par exemple un arbre 41 relié mécaniquement à l'arbre 32. Cette liaison mécanique peut par exemple comprendre des bras, pignons, paliers reliés à des actionneurs 42 électriques ou électromagnétiques permettant de relier mécaniquement l'arbre 41 de commande et l'arbre 32 de déplacement de la pale 31. Selon un mode préférentiel de réalisation, un seul actionneur peut être configuré pour l'ensemble des pales 31 du distributeur.

Les actionneurs 42 sont pilotés par une unité centrale de commande 50, qui peut être de tout type.

Un distributeur selon l'invention est particulièrement destiné à équiper une turbine d'un système de conditionnement d'air d'un aéronef.

Un tel système de conditionnement d'air comprend typiquement un ensemble d'organes renfermés dans un carter et présentant des ports de connexion d'entrée et de sortie d'air et un canal de circulation d'air dynamique, plus connu sous le terme d'air RAM, à travers un ou plusieurs échangeurs thermiques. Un tel pack peut faire l'objet de nombreuses variantes de réalisation compatible avec l'invention. Par exemple, il peut comprendre au moins une turbomachine à cycle à air qui comprend un compresseur et une turbine reliés l'un à l'autre par un arbre rotatif. La turbomachine peut également comprendre un ventilateur configuré pour assurer la circulation d'un air dynamique à travers les échangeurs thermiques. Selon une autre variante, la turbomachine peut comprendre un moteur électrique pour former un pack de conditionnement d'air électrique. Le pack peut aussi comprendre une boucle d'extraction d'eau et une conduite de sortie de turbomachine reliée à une chambre de mélange qui débouche dans la cabine à alimenter en air à température et pression contrôlées. La turbine de la machine à cycle à air est selon l'invention équipée d'un distributeur selon l'invention, ce qui permet à la turbine d'assurer une large plage de débit d'air tout en fournissant le maximum de puissance possible sur l'ensemble de la plage de fonctionnement.

Le principe de l'invention pourrait également s'appliquer à un diffuseur variable d'un compresseur centrifuge.

L'invention a été particulièrement décrite pour une application aéronautique. Cela étant, l'invention pourrait également s'appliquer à un système de conditionnement d'air mis en œuvre dans une automobile, par exemple pour un système d'alimentation en air d'une pile à combustibles.

L'invention pourrait également s'appliquer à un système de climatisation d'air pour un véhicule ferroviaire et d'une manière générale à tout domaine technique nécessitant une modification de la section d'injection sur une large plage de débit.

## Revendications

1. Distributeur (30) d'une turbine radiale de turbomachine comprenant un rotor équipé d'ailettes (21) adapté pour être mis en rotation autour d'un axe central (10), ledit distributeur (30) comprenant une grille annulaire (26) s'étendant autour dudit axe central (10), destinée à être agencée en périphérie dudit rotor et comprenant une pluralité de pales (31) à calage variable agencées autour dudit axe central (10) délimitant entre elles une section de passage d'une veine d'air dudit distributeur vers ledit rotor, chaque pale (31) à calage variable s'étendant en outre selon une direction principale (34) et présentant un bord d'attaque et un bord de fuite destiné à être agencé en regard du bord d'attaque des ailettes du rotor, **caractérisé en ce que** chaque pale (31) à calage variable est montée mobile en rotation autour d'un arbre de pivotement (32) s'étendant parallèlement à l'axe central (10), cet arbre de pivotement (32) étant lui-même mobile par rapport à l'axe central selon une direction, dite direction de translation, comprenant au moins une composante radiale, de sorte que cette pale (31) puisse, sur actionnement de moyens de commande (40), être pivotée autour de l'arbre de pivotement (32) et/ou déplacée par rapport à l'axe central suivant ladite direction de translation de manière à pouvoir modifier ladite section de passage de la veine d'air d'amont en aval du distributeur, en contrôlant respectivement l'angle, dit angle métal (*α*3), formé entre la direction principale de la pale et la direction radiale, et l'écart radial (ΔR) qui sépare le bord de fuite de la pale et le bord d'attaque des ailettes du rotor.

2. Distributeur selon la revendication 1, caractérisé en ce ledit arbre de pivotement (32) de chaque pale (31) est monté mobile en translation radiale par rapport à l'axe central (10) de sorte que ladite direction de translation coïncide avec la direction radiale.

3. Distributeur selon la revendication 2, **caractérisé en ce que** lesdits moyens de commande (40) desdites pales (31) à calage variable sont configurés pour pouvoir contrôler, pour chaque pale (31), le pivotement de la pale autour de son arbre de pivotement (32) concomitamment au déplacement de la pale selon ladite direction de translation.

4. Distributeur selon l'une des revendications 2 ou 3, **caractérisé en ce que** lesdits moyens de commande de chaque pale comprennent des moyens mécaniques de renvoi d'axe permettant de déplacer ladite pale selon une translation radiale de ladite pale.

5. Distributeur selon l'une des revendications 1 à 4, **caractérisé en ce que** lesdits moyens de commande (40) desdites pales (31) à calage variable sont configurés pour pouvoir maintenir constant, pour chaque pale, et pour toute position de l'arbre de pivotement (32) de cette pale, le coefficient El=ΔR/H.cos(*α*3f), où ΔR définit l'écart radial qui sépare le bord de fuite de la pale et le bord d'attaque des ailettes du rotor, *α3f* définit l'angle formé entre la direction d'écoulement de l'air au niveau du bord de fuite de la pale et la direction radiale, et H définit la hauteur, selon la direction de l'axe central, de la veine d'air.

6. Distributeur selon l'une des revendications 1 à 5, **caractérisé en ce qu'**il comprend au moins treize pales (31) à calage variable régulièrement réparties autour de l'axe central (10).

7. Turbine radiale de turbomachine s'étendant le long d'un axe central (10) et comprenant un rotor (20) équipé d'ailettes (21) monté mobile en rotation autour dudit axe central (10), un distributeur (30) agencé en périphérie dudit rotor (20) comprenant une pluralité de pales (31) à calage variable, et une volute (12) comprenant une entrée d'air (12a) et une sortie d'air (12b) débouchant sur ladite pluralité de pales (31) à calage variable, **caractérisée en ce que** ledit distributeur (30) est un distributeur selon l'une des revendications 1 à 6.

8. Système de conditionnement d'air d'un aéronef comprenant une turbomachine comprenant au moins une turbine et un compresseur, **caractérisé en ce que** ladite turbine est une turbine radiale conforme à la revendication 7.

9. Aéronef comprenant au moins une cabine alimentée en air à température et pression contrôlées par un système de conditionnement d'air, **caractérisé en ce que** ledit système de conditionnement d'air est un système conforme à la revendication 8.

## Patentansprüche

1. Verteiler (30) einer Radialturbine einer Turbomaschine mit einem Rotor, der mit Schaufeln (21) versehen ist, die angepasst sind, um eine Mittelachse (10) gedreht zu werden, worin der Verteiler (30) ein ringförmiges Gitter (26) aufweist, das sich um die Mittelachse (10) erstreckt, und dazu bestimmt ist, am Umfang des Rotors angeordnet zu werden, und mehrere Schaufeln (31) mit variabler Steigung umfasst, die um die Mittelachse (10) angeordnet sind und zwischen denen ein Durchgangsquerschnitt eines Luftstroms vom Verteiler zum Rotor begrenzt ist, worin sich jede Schaufel (31) mit variabler Steigung außerdem in einer Hauptrichtung (34) erstreckt und eine Vorderkante und eine Hinterkante aufweist, die dazu bestimmt ist, der Vorderkante abgewandt an den Rotorschaufeln angeordnet zu werden,
**dadurch gekennzeichnet, dass** jede Schaufel (31) mit variabler Steigung um eine sich parallel zur Mittelachse (10) erstreckende Schwenkachse (32) drehbar montiert ist, wobei diese Schwenkachse (32) ihrerseits in Bezug auf die Mittelachse in einer Richtung, der sogenannten Versetzungsrichtung, die mindestens eine radiale Komponente umfasst, beweglich ist, so dass diese Schaufel (31) bei Betätigung von Steuermitteln (40), um die Schwenkachse (32) geschwenkt und/oder relativ zur Mittelachse in der genannten Versetzungsrichtung versetzt werden kann, um den genannten Durchgangsquerschnitt des Luftstroms von stromaufwärts nach stromabwärts des Verteilers zu verändern, indem der Winkel, Metallwinkel (a3) genannt, der zwischen der Hauptrichtung der Schaufel und der radialen Richtung gebildet wird, bzw. der radiale Abstand (ΔR), der die Hinterkante der Schaufel und die Vorderkante der Rotorschaufeln trennt, gesteuert wird.

2. Verteiler nach Anspruch 1, **dadurch gekennzeichnet, dass** die Schwenkachse (32) jeder Schaufel (31) in Bezug auf die Mittelachse (10) radial verschiebbar montiert ist, so dass die Versetzungsrichtung mit der radialen Richtung zusammenfällt.

3. Verteiler nach Anspruch 2, **dadurch gekennzeichnet, dass** die Steuermittel (40) der Schaufeln (31) mit variabler Steigung ausgestaltet sind, für jede Schaufel (31) die Drehung der Schaufel um ihre Schwenkachse (32) gleichzeitig mit der Bewegung der Schaufel in der Versetzungsrichtung steuern zu können.

4. Verteiler nach Anspruch 2 oder Anspruch 3, **dadurch gekennzeichnet, dass** die Steuermittel jeder Schaufel mechanische Achsenrückstellmittel umfassen, die es ermöglichen, die Schaufel entsprechend einer radialen Versetzung der Schaufel zu bewegen.

5. Verteiler nach einem der Ansprüche 1 bis 4, **dadurch gekennzeichnet, dass** die Steuermittel (40) der Schaufeln (31) mit variabler Steigung ausgestaltet sind, für jede Schaufel und für jede Position der Schwenkachse (32) dieser Schaufel den Koeffizienten El=ΔR/H.cos(α3f) konstant zu halten, wobei ΔR den radialen Abstand zwischen der Hinterkante der Schaufel und der Vorderkante der Rotorschaufeln definiert, *α*3f den Winkel definiert, der zwischen der Richtung des Luftstroms an der Hinterkante der Schaufel und der radialen Richtung gebildet wird, und H die Höhe des Luftstroms in Richtung der Mittelachse definiert.

6. Verteiler nach einem der Ansprüche 1 bis 5, **dadurch gekennzeichnet, dass** dieser mindestens dreizehn Schaufeln (31) mit variabler Steigung umfasst, die gleichmäßig um die Mittelachse (10) verteilt sind.

7. Radialturbine einer Turbomaschine, die sich entlang einer Mittelachse (10) erstreckt und einen Rotor (20), der mit Schaufeln (21) versehen ist, die um die Mittelachse (10) drehbar montiert sind, einen am Umfang des Rotors (20) angeordneten Verteiler (30) mit mehreren Schaufeln (31) mit variabler Steigung, und eine Spirale (12) mit einem Lufteinlass (12a) und einem Luftauslass (12b) umfasst, der auf die mehreren Schaufeln (31) mit variabler Steigung mündet, **dadurch gekennzeichnet, dass** das Verteiler (30) ein Verteiler nach einem der Ansprüche 1 bis 6 ist.

8. Klimaanlage für ein Flugzeug mit einer Turbomaschine, die mindestens eine Turbine und einen Verdichter umfasst, **dadurch gekennzeichnet, dass** die Turbine eine Radialturbine nach Anspruch 7 ist.

9. Luftfahrzeug welches mindestens eine Kabine umfasst, die mit Luft mit einer bestimmten Temperatur und einem Druck versorgt wird, die durch eine Klimaanlage gesteuert werden, **dadurch gekennzeichnet, dass** die Klimaanlage eine Anlage nach Anspruch 8 ist.

## Claims

1. Distributor (30) of a turbomachine radial turbine comprising a rotor equipped with vanes (21) adapted to be rotated about a central axis (10), said distributor (30) comprising an annular grill (26) extending about said central axis (10), intended to be arranged on the periphery of said rotor and comprising a plurality of variable-pitch blades (31) arranged about said central axis (10) delimiting between them a passage cross section of an air stream from said distributor to said rotor, each variable-pitch blade (31) further extending in a main direction (34) and having a leading edge and a trailing edge intended to be arranged opposite the leading edge on the rotor vanes,
**characterized in that** each variable-pitch blade (31) is mounted to be rotatably movable about a pivot shaft (32) extending parallel to the central axis (10), this pivot shaft (32) being itself movable relative to the central axis in one direction, called the translation direction, comprising at least one radial component, so that this blade (31) may, upon actuation of control means (40), be pivoted about the pivot shaft (32) and/or moved relative to the central axis in said translation direction so as to be able to modify said passage cross section of the air stream from upstream to downstream of the distributor, by controlling respectively the angle, called metal angle (*α*3), formed between the main direction of the blade and the radial direction, and the radial spacing (ΔR) which separates the trailing edge of the blade and the leading edge of the rotor vanes.

2. Distributor according to claim 1, **characterized in that** said pivot shaft (32) of each blade (31) is mounted to be movable in radial translation with respect to the central axis (10) so that said translation direction coincides with the radial direction.

3. Distributor according to claim 2, **characterized in that** said control means (40) of said variable-pitch blades (31) are configured to be able to control, for each blade (31), the pivoting of the blade about its pivot shaft (32) concomitantly with the movement of the blade in said translation direction.

4. Distributor according to either claim 2 or claim 3, **characterized in that** said control means of each blade comprise mechanical axle return means making it possible to move said blade according to a radial translation of said blade.

5. Distributor according to any of claims 1 to 4, **characterized in that** said control means (40) of said variable-pitch blades (31) are configured to be able to keep, for each blade, and for any position of the pivot shaft (32) of this blade, the coefficient El=ΔR/H.cos(*α*3f) constant, where ΔR defines the radial spacing between the trailing edge of the blade and the leading edge of the rotor vanes, *α3f* defines the angle formed between the direction of air flow at the trailing edge of the blade and the radial direction, and H defines the height, in the direction of the central axis, of the air stream.

6. Distributor according to any of claims 1 to 5, **characterized in that** it comprises at least thirteen variable-pitch blades (31) which are evenly distributed about the central axis (10).

7. Turbomachine radial turbine extending along a central axis (10) and comprising a rotor (20) equipped with vanes (21) mounted to be rotatably movable about said central axis (10), a distributor (30) arranged on the periphery of said rotor (20) comprising a plurality of variable-pitch blades (31), and a volute (12) comprising an air inlet (12a) and an air outlet (12b) opening onto said plurality of variable-pitch blades (31), **characterized in that** said distributor (30) is a distributor according to any of claims 1 to 6.

8. Air conditioning system for an aircraft comprising a turbomachine comprising at least one turbine and one compressor, **characterized in that** said turbine is a radial turbine according to claim 7.

9. Aircraft comprising at least one cabin supplied with air at a temperature and pressure controlled by an air conditioning system, **characterized in that** said air conditioning system is a system according to claim 8.
